(19) Europäisches Patentamt
European Patent Office
Office européen des brevets

(11) EP 3 601 459 B1

(12) FASCICULE DE BREVET EUROPEEN

(45) Date de publication et mention de la délivrance du brevet:
**07.02.2024 Bulletin 2024/06**

(21) Numéro de dépôt: **18713277.4**

(22) Date de dépôt: **29.03.2018**

(51) Classification Internationale des Brevets (IPC):
***C09D 183/04*** *(2006.01)* ***C09D 183/06*** *(2006.01)*
***C08L 83/04*** *(2006.01)* ***C08L 83/06*** *(2006.01)*

(52) Classification Coopérative des Brevets (CPC):
(C-Sets disponibles)
**C09D 183/06;** C08G 77/12; C08G 77/14;
C08G 77/20 (Cont.)

(86) Numéro de dépôt international:
**PCT/EP2018/058261**

(87) Numéro de publication internationale:
**WO 2018/178321 (04.10.2018 Gazette 2018/40)**

# (54) PROCÉDÉ DE RÉALISATION D'UN REVÊTEMENT HYDROFUGE ET ANTI-ADHÉRENT SUR UN SUPPORT

VERFAHREN ZUR HERSTELLUNG EINER FEUCHTIGKEITSBESTÄNDIGEN UND ANTIHAFTENDEN BESCHICHTUNG AUF EINEM TRÄGER

PROCESS FOR MAKING A WATER-REPELLENT AND ANTI-STICKING COATING ON A SUPPORT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2017 FR 1700348**

(43) Date de publication de la demande:
**05.02.2020 Bulletin 2020/06**

(73) Titulaire: **ELKEM SILICONES France SAS**
**69003 Lyon (FR)**

(72) Inventeurs:
- **MAGD, Frédéric**
  **69160 Tassin-la-Demi-Lune (FR)**
- **MARCHAL, Frédéric**
  **69007 Lyon (FR)**
- **MAADADI, Yassine**
  **69330 Meyzieu (FR)**
- **WALTER, Thierry**
  **69270 Fontaines-sur-Saône (FR)**

(56) Documents cités:
**WO-A1-2008/000771 WO-A1-2012/175825**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC): (Cont.)

C-Sets
**C09D 183/06, C08K 5/56, C08L 83/04**

## Description

### Domaine de l'invention

Le domaine de l'invention est celui de la préparation de revêtements anti-adhérents et hydrofuges sur un support de préférence souple tel qu'un support souple en papier ou en film polymère synthétique tel que ceux du type polyoléfine, par exemple polypropylène ou polyéthylène, ou polyester. Les revêtements anti-adhérents considérés sont plus spécialement ceux à base d'élastomère silicone réticulé après enduction sur ces supports.

### Art Antérieur

Dans ce domaine d'application, les formulations silicones liquides sont appliquées sur les films supports dans des dispositifs industriels d'enduction comportant des cylindres fonctionnant à des vitesses variées. Naturellement, il est clair que dans ces procédures d'enduction plus une grande vitesse est recherchée et plus la viscosité de la formulation silicone liquide d'enduction doit être minutieusement adaptée aux conditions opératoires d'enduction. C'est pour cette raison que ces formulations silicones liquides d'enduction sont parfois diluées dans un solvant. Cependant pour des raisons d'hygiène et de sécurité, la formulation silicone liquide est préférentiellement mise en oeuvre sous forme de dispersion ou d'émulsion aqueuse. Ainsi, une fois appliquée sur le film support et après élimination de la phase aqueuse qui s'opère le plus souvent par chauffage en maintenant la température ambiante entre 80°C et 220°C, l'émulsion silicone réticule pour former un revêtement solide en élastomère silicone anti-adhérent et/ou hydrofuge. Compte tenu des cadences industrielles d'enduction à haute vitesse, la cinétique de réticulation doit être élevée.

Parmi les supports souples utilisés qui sont revêtus d'un film silicone anti-adhérent on peut citer par exemple les films polymères de protection de la face adhésive d'un élément autocollant ou adhésif sensible à la pression, cet élément étant en film polymère du type polychlorure de vinyle (PVC), polyéthylène (PE), polypropylène (PP), polyester tel que polyéthylène téréphtalate (PET), la face non-adhésive de cet élément étant généralement imprimée ou imprimable de manière à pouvoir servir d'étiquette apte à être décollée de son support et collée par simple pression sur un article à identifier.

Or, dans l'état de l'art, il est connu que sur ce type de support les caractéristiques d'adhérence des films silicones réticulés sont médiocres. Ces mauvaises caractéristiques d'adhérence sont encore amplifiées dès lors que les vitesses d'enduction/réticulation de l'émulsion silicone liquide augmentent. Compte tenu du fait que les cadences industrielles d'enduction tendent à être augmentées, la cinétique de réticulation doit être extrêmement rapide pour conduire à une réticulation correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du revêtement silicone anti-adhérent peut notamment se faire au travers du dosage des composés extractibles non réticulés, dont la quantité doit être la plus réduite possible. Par exemple, le taux d'extractibles est préférablement inférieur à 5%, dans des conditions industrielles normales de réticulation.

L'anti-adhérence de la face externe libre du revêtement silicone s'exprime au travers de la force de décollement, qui doit être faible et contrôlée, pour l'élément destiné à être disposé sur le support revêtu par le film silicone anti-adhérent. Classiquement, cet élément peut être la face adhésive d'une étiquette ou d'un ruban.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off", qui consiste à frotter la surface du revêtement avec le doigt et à mesurer le nombre de passages successifs avant dégradation du revêtement.

Une autre contrainte à prendre en compte est que le coefficient de friction du revêtement d'élastomère silicone réticulé soit contrôlable, de manière à faciliter les opérations d'enroulement/déroulement des supports souples en polymère (notamment en polyester tel que le PET), utiles comme "liners" pour étiquettes.

Il est important pour cette application que le revêtement silicone élastomère ne nuise ni à l'aspect lisse, ni à la transparence, ni aux propriétés mécaniques du support. La transparence est souhaitable pour l'inspection de la régularité du film à l'aide de détecteurs optiques.

Dans un revêtement anti-adhérent, le contrôle de la force de décollement est important. Avantageusement, ce contrôle doit être effectif à basse et à haute vitesse. L'équilibre entre les forces de décollement à basse vitesse et les forces de décollement à haute vitesse est appelé communément le profil d'anti-adhérence.

Au-delà des propriétés évoquées ci-dessus pour tous supports il convient avant tout que l'adhérence ou l'accrochage du revêtement silicone sur le support, mesurée par la résistance à l'abrasion soit optimale et durable dans le temps, ceci même en présence de l'adhésif de l'étiquette.

Or, dans le cadre de l'invention, on s'intéresse plus spécialement à la cinétique de réticulation de la composition silicone d'enduction ainsi qu'à l'optimisation de l'adhésion ou d'accrochage du revêtement silicone sur le support même quand il est soumis à des conditions de température et humidité élevée, par exemple 50°C et 70°% d'humidité relative.

On connaît par la demande EP1594693, des compositions silicone anti-adhérentes ayant une adhésion améliorée sur supports papier ou polymère et comprenant à titre d'additifs promoteur d'accrochage, des organopolysiloxanes porteurs d'au moins un motif époxy ou un motif anhydride d'acide carboxylique et d'au moins un motif SiH. La demande de brevet EP 2563870 décrit l'utilisation d'additif promoteur d'accrochage comprenant des motifs fonctionnels époxy et des motifs SiH et caractérisé par une teneur en motifs époxy inférieure ou égale à 100mmol/100g d'additif d'accrochage. Ce taux d'époxy est décrit comme essentiel et est exemplifié avec des tests comparatifs mettant en oeuvre des additifs semblables mais dont les taux d'époxy sont de 116mmol/100g, 128 mmol/100g et de 181 mmol/100g respectivement. Les tests comparatifs montrent des problèmes de démixtion de l'additif d'accrochage lorsque le taux d'époxy est supérieur à 100 mmol/100g d'additif.

WO2008000771 décrit un procédé de réalisation d'un revêtement hydrofuge et anti-adhérent à base d'une composition silicone non-emulsifiée.

Il a été maintenant trouvé qu'une émulsion aqueuse silicone réticulable par des réactions de polyadddition après élimination de l'eau comprenant un additif d'accrochage qui est un organopolysiloxane spécifique ayant des motifs SiH fonctionnels et des motifs époxy permettent un accrochage optimum du revêtement silicone obtenu après enduction, élimination de l'eau et réticulation sur un support de préférence souple tel qu'un support souple en papier ou en film polymère synthétique tel que ceux du type polyoléfine, par exemple polypropylène ou polyéthylène, ou polyester.

Dans ce contexte, la présente invention a pour objectif essentiel de proposer un nouveau procédé de réalisation d'un revêtement silicone réticulé qui est hydrofuge et anti-adhérent sur un support. Ce revêtement de silicone réticulé présente :

- des propriétés améliorées d'accrochage sur ce type de support grâce à un additif promoteur d'accrochage,
- une réticulation suffisante pour avoir des propriétés mécaniques et d'adhérence convenables, et
- un faible taux d'extractibles pour une bonne permanence des propriétés anti-adhérentes favorable en particulier pour la préparation et l'utilisation des étiquettes adhésives issues de ces complexes.

Un autre objectif de l'invention est de fournir une émulsion silicone aqueuse réticulable en un élastomère silicone par des réactions de polyaddition et utile selon le procédé de l'invention.

Ces objectifs, parmi d'autres, sont atteints par la présente invention qui concerne en premier lieu un procédé de réalisation d'un revêtement hydrofuge et anti-adhérent sur un support **S,** de préférence sur un support **S** souple en papier ou en film polymère synthétique, comprenant les étapes suivantes :

1) on prépare une émulsion silicone aqueuse **E1** réticulable en un élastomère silicone par des réactions de polyaddition comprenant :

- au moins un organopolysiloxane **A** présentant par molécule au moins deux groupements fonctionnels insaturés de type alcényle en $C_2$-$C_6$, liés au silicium,
- au moins un organopolysiloxane **B** présentant par molécule au moins trois atomes d'hydrogène liés au silicium,
- au moins un catalyseur de polyaddition **C,**
- au moins un agent d'émulsification **D,**
- de l'eau,
- éventuellement au moins un inhibiteur de réticulation **F,**
- éventuellement au moins un agent **G** de fixation du pH choisi de manière à maintenir le pH de l'émulsion **E1** entre 5 et 9, de préférence entre 5,5 et 8,5 et plus préférentiellement encore entre 6 et 8,
- éventuellement au moins un additif de formulation **H,** et
- au moins un additif **X** qui est un organopolysiloxane linéaire comprenant des motifs siloxyle **(I.1)** à **(I.3)** de formules suivantes :

$$Y_a Z^1_b SiO_{\frac{4-(a+b)}{2}} \quad \textbf{(I.1)}$$

$$Z^2_3 SiO_{\frac{1}{2}} \quad \textbf{(I.2)}$$

$$H_dZ^3_eSiO_{\frac{4-(d+e)}{2}} \quad \textbf{(I.3)}$$

et ne comprenant pas de motifs de formule **(I.4)**:

$$Z^2_2SiO_{\frac{2}{2}} \quad \textbf{(I.4)}$$

dans lesquelles :

- a=1 et b=1 ou 2 ;
- d=1 et e=1 ou 2 ;
- le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique, et
- les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle,

avec les conditions suivantes :

- l'additif **X** comprend, par molécule, au moins deux motifs siloxyles **(I.1)** porteurs de groupes hydrocarbonés époxyfonctionnels, au moins trois motifs siloxyles **(I.3)** porteurs de groupes hydrogénosiloxyles et un nombre de motifs siloxyles total **N** compris entre 7 et 30, et
- l'additif **X** a une teneur en motifs siloxyles **(I.1)** supérieure ou égale à 200 mmol pour 100 g d'additif **X** ;

2) on applique sur au moins une face dudit support souple **5** l'émulsion silicone aqueuse **E1,** et
3) on élimine l'eau et on effectue la réticulation de préférence par chauffage à une température comprise entre 80°C et 220°C.

Il est du mérite des inventeurs d'avoir mis au point et utilisé dans une émulsion silicone réticulant par des réactions de polyaddition un additif **X** promoteur d'accrochage dont la teneur en époxy (motifs siloxyles **(I.1))** est supérieure ou égale à 200 mmol pour 100 g d'additif **X** et d'obtenir :

- des propriétés améliorées d'accrochage sur ce type de support grâce à un additif promoteur d'accrochage,
- une réticulation suffisante pour avoir des propriétés mécaniques et d'adhérence convenables, et
- un faible taux d'extractibles pour une bonne permanence des propriétés anti-adhérentes favorable en particulier pour la préparation et l'utilisation des étiquettes adhésives issues de ces complexes.

Ceci est d'autant plus méritoire que l'enseignement du document de l'art antérieur EP-2563870 décrit des tests comparatifs pour la même application avec des formulations silicones sans solvant organique ou aqueux qui mettent en oeuvre des additifs de structures proches mais dont les taux d'époxy sont de 116mmol/100g, 128 mmol/100g et de 181 mmol/100g. Les résultats exemplifiés dans ce document montrent des problèmes de démixtion de l'additif d'accrochage lorsque le taux d'époxy est supérieur à 100 mmol/100g d'additif.

Dans le présent recueil, on entend par l'expression « support souple », un support qui peut être courbé ou plié par la seule force de l'homme sans se casser, ni s'abîmer.

L'additif **X** peut être obtenu par hydrosilylation de synthons organiques comprenant au moins un cycle hydrocarboné dans lequel est inclus un atome d'oxygène par un organopolyhydrogénosiloxane linéaire ne comprenant pas de motifs **(I.4)** tels que décrits précédemment. Ces réactions d'hydrosilylation peuvent être catalysées par le platine, notamment par du platine supporté sur charbon comme décrit dans le brevet EP 0904315 ou par des complexes de platine avec des ligands carbène comme décrit dans le brevet EP 1309647. De préférence, le catalyseur utilisé sera un

complexe de platine avec des ligands carbène car la réaction d'hydrosilylation est mieux maîtrisée et la stabilité au stockage de l'additif **X** obtenu est améliorée.

De préférence, l'additif **X** ne contient pas de groupes fonctionnels alkoxy, vinyl, hydroxyle ou méthacryloxy.

Il est à noter que les propriétés d'accrochage sur support sont d'autant plus positives, qu'elles perdurent longtemps de quelques semaines à plusieurs mois, dans des conditions sévères d'humidité et de température.

Un avantage lié à l'utilisation d'un additif **X** selon l'invention dans l'émulsion aqueuse **E1** est qu'il permet d'obtenir sur un support après application, élimination de l'eau et réticulation un revêtement silicone réticulé, hydrofuge et anti-adhérent présentant une excellente résistance à l'abrasion même après un vieillissement accéléré (7 jours de stockage à 40°C et sous 70% d'humidité relative).

Cet additif **X** selon l'invention présente aussi l'avantage de se conserver de manière prolongée, dans un état liquide, non gélifié, propre à être utilisé dans une composition à déposer sur un support pour former un revêtement anti-adhérent.

Grâce à l'invention, les revêtements obtenus ont non seulement un excellent accrochage ("rub-of"), mais sont également dotés d'une force de décollement suffisamment élevée à grande vitesse et de bonnes propriétés mécaniques et physiques (aspect lisse, transparence et bon coefficient de friction).

Les performances atteintes grâce à l'invention en termes de qualité de la réticulation par polyaddition : réactivité/niveau de réticulation/cinétique, sont tout à fait intéressantes, comme en témoigne les faibles taux d'extractibles obtenus, pour ce qui concerne la réactivité et le niveau de réticulation.

Le revêtement obtenu est particulièrement adhérent sur le support, permet d'apporter la propriété d'anti-adhérence ("release") vis-à-vis des adhésifs types adhésifs sensibles à la pression, et présente une excellente résistance mécanique au contact prolongé avec ces adhésifs, y compris acryliques.

Ces caractéristiques avantageuses sont particulièrement exploitables pour réaliser l'anti-adhérence de supports souples qui sont sous la forme de film polymère synthétique, utiles, par exemple, comme "liners" d'étiquettes autocollantes (adhésif sensible à la pression), se présentant sous forme de rouleaux ou de bobines de films e.g. fabriqués à très grande vitesse.

En outre, les émulsions aqueuses silicones d'enduction utilisées dans le procédé selon l'invention ne nécessitent pas l'adjonction de solvant organique. On conçoit aisément les avantages que cela procure s'agissant de l'hygiène et de la sécurité.

Selon une variante avantageuse du procédé selon l'invention, à l'étape 1) l'émulsion silicone aqueuse E1 est préparée par mélange de « pré-émulsions » comprenant un ou plusieurs constituants de l'émulsion silicone aqueuse selon l'invention mais qui sont chacune inaptes à réticuler séparément du fait qu'elles ne présentent pas toutes les espèces réactives et le catalyseur nécessaire pour la polyaddition.

Par exemple l'émulsion silicone aqueuse **E1** est préparée en mélangeant :

- une première « pré-émulsion » comprenant les organopolysiloxanes **A** et **B,** l'agent d'émulsification **D,** l'inhibiteur réticulation **F,** de l'eau, éventuellement au moins un agent **G** de fixation du pH choisi de manière à maintenir le pH de l'émulsion **E1** entre 5 et 9 et éventuellement au moins un additif de formulation **H,**
- une deuxième « pré-émulsion » catalysante comprenant le catalyseur de polyaddition **C,** l'agent d'émulsification **D,** l'organopolysiloxane, de l'eau, éventuellement au moins un agent **G** de fixation du pH choisi de manière à maintenir le pH de l'émulsion **E1** entre 5 et 9 et éventuellement au moins un additif de formulation **H,** et
- une troisième « pré-émulsion » comprenant l'additif X, l'agent d'émulsification **D,** de l'eau, éventuellement au moins un agent **G** de fixation du pH choisi de manière à maintenir le pH de l'émulsion **E1** entre 5 et 9 et éventuellement au moins un additif de formulation **H.**

Cela facilite grandement l'obtention d'une émulsion stable selon l'invention et qui peut être aisément préparée dans des conditions industrielles.

De préférence, la quantité d'émulsion silicone aqueuse **E1** appliquée sur au moins une face dudit support est déterminée de manière à obtenir un support revêtu d'une couche d'élastomère silicone réticulé dont la quantité est comprise entre 0.1 g/$m^2$ et 1 g/$m^2$ et de préférence voisin de 0.5 g/$m^2$.

A l'étape 2) du procédé selon l'invention où l'on applique l'émulsion, il est avantageux d'utiliser une technique d'enduction. Ainsi cette enduction peut notamment être réalisée par racle, en particulier par racle sur cylindre, racle en l'air et racle sur tapis, ou par foulardage, c'est-à-dire par exprimage entre deux rouleaux, ou encore par rouleau lécheur, cadre rotatif, rouleau inverse "reverse roll", transfert, pulvérisation. On peut enduire l'une ou les deux faces du support souple, l'enduction des deux faces étant alors avantageusement réalisée par foulardage. Après passage entre les rouleaux, le support souple est enduit uniformément d'une couche fine d'émulsion. On procède ensuite au séchage et à la réticulation, de préférence par air chaud ou infra-rouges, notamment de 30 s à 5 min, à une température de réticulation sans dépasser la température de dégradation du support souple. Lorsque l'enduction est effectuée sur une seule face, on utilise préférablement une racle. L'émulsion est déposée en continu sur la face supérieure du support souple, puis

passe sous la racle, avant séchage et réticulation comme ci-dessus.

De préférence, l'enduction est réalisée :

- ♦ par immersion du support dans un bain d'émulsion telle que définie supra,
- ♦ puis on élimine l'eau et on effectue la réticulation, de préférence sous activation thermique.

Ces émulsions peuvent aussi être appliquées à l'aide de moyens connus et appropriés, par exemple à la racle, au rouleau " size-press ", au cylindre gravé ou au " gate roll ".

Les moyens d'activation thermique de la réticulation sont classiquement des fours, (par exemple fours-tunnels), des rouleaux chauds, voire des sources d'infrarouge. Cette activation thermique peut être complétée par une activation actinique et/ou par bombardement d'électrons.

Le taux d'enduction est varié suivant l'application visée. Il peut par exemple être inférieur ou égal à 1,2 g de silicone/$m^2$ de support ou inférieur ou égal à 0,50 g de silicone /$m^2$ de support.

De préférence le support **S** est un support souple en papier ou en film polymère synthétique. Un support **S** souple peut être par exemple :

- un papier ou un film polymère du type polyoléfine (polychlorure de vinyle (PVC), Polypropylène ou Polyéthylène, ou de type polyester (PolyéthylèneTéréphtalate ou PET), ou
- un ruban adhésif dont la face interne est enduite d'une couche d'adhésif sensible à la pression et dont la face externe est destinée à recueillir le revêtement silicone réticulé anti-adhérent.

Les supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Encore plus préférentiellement, le support **5** est un support souple en polyester tels qu'un film souple en polyéthylène téréphtalate (PET).

Les revêtements silicone réticulés et anti-adhérents selon l'invention sont bien et durablement accrochés sur les supports, même dans des conditions drastiques d'humidité et de température, et au contact prolongé avec un adhésif acrylique. Ils sont réticulés/durcis (peu d'extractibles). Ils ont un profil de force de décollement tel que la force de pelage reste élevée même à grande vitesse (bonne anti-adhérence). Ils sont lisses et transparents, ce qui finit de faire d'eux des supports d'étiquettes performants.

De préférence, l'additif **X** a une teneur en motifs siloxyles **(I.1)** comprise entre 0,20 et 0,45 mol/100g d'additif **X.**

Encore plus avantageusement l'additif **X** a une teneur en motifs siloxyles **(I.1)** supérieure ou égale à 200 mmol pour 100 g d'additif **X** et une teneur en motifs siloxyles **(I.3)** supérieure ou égale à 300 mmol pour 100 g d'additif **X.**

Selon un mode encore plus avantageux, l'additif **X** a :

- une teneur en motifs siloxyles **(I.1)** comprise entre 200 mmol/100g d'additif **X** et 450 mmol/100g d'additif **X,** et
- une teneur en motifs siloxyles **(I.3)** comprise entre 300 mmol/100g d'additif **X** et 850 mmol/100g d'additif **X** .

Conformément à une autre disposition préférée de l'invention, dans l'additif **X** le ratio molaire entre les motifs siloxyles **(I.1)** et les motifs siloxyles **(I.3)** est compris entre 0,5 et 4, de préférence compris entre 0,8 et 3,5 et encore plus préférentiellement entre 1 et 3,5.

Selon un autre mode de réalisation préféré de l'invention, l'additif **X** a un nombre **N1** de motifs siloxyle **(1.1)** et un nombre **N3** de motifs siloxy **(I.3)** qui répondent aux conditions suivantes :

- $2 \leq$ **N1** $\leq 10$ et de préférence $3 \leq$ **N1** $\leq 7$, et
- $3 \leq$ **N3** $\leq 20$ et de préférence $5 \leq$ **N3** $\leq 20$.

Selon un autre mode de réalisation préféré de l'invention, l'additif **X** a un nombre total **N** de motifs siloxyle compris entre 7 et 25 bornes incluses et encore plus préférentiellement entre 7 et 15.

Selon un autre mode de réalisation préféré de l'invention, pour le motif siloxyle (1.1) de l'additif **X,** le symbole **Y** est choisi parmi le groupe constitué par les groupements **(R-1)** à **(R-6)** de formules suivantes :

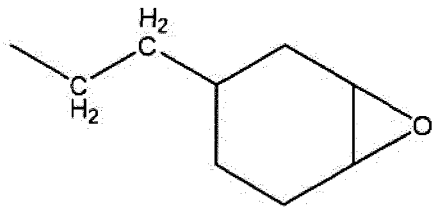

(R-1)

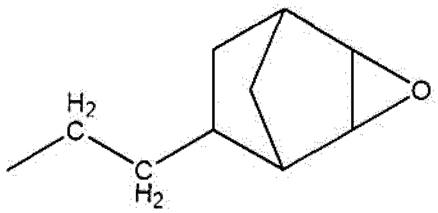

(R-2)

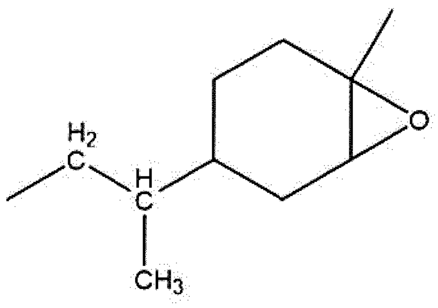

(R-3)

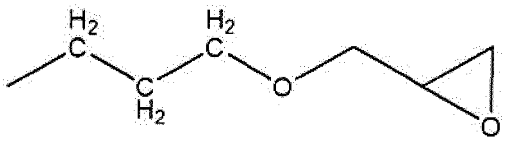

(R-4)

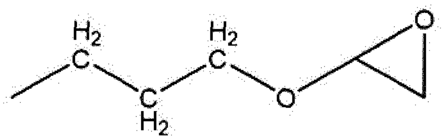

(R-5)

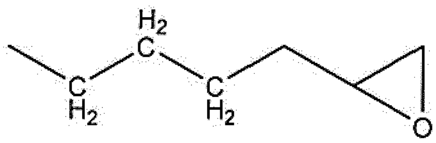

(R-6)

Selon un mode préférentiel, l'additif **X** répond aux critères selon l'invention tels que décrits ci-dessus et est constitué des motifs siloxyles choisis parmi les motifs siloxyles **(I.1)** à **(I.3)** de formules suivantes :

$$Y_aZ^1_bSiO_{\frac{4-(a+b)}{2}} \qquad \textbf{(I.1)}$$

$$Z^2_3SiO_{\frac{1}{2}} \qquad \textbf{(I.2)}$$

$$H_dZ^3_eSiO_{\frac{4-(d+e)}{2}} \qquad \textbf{(I.3)}$$

dans lesquelles

- a=1 et b=1 ou 2,
- d=1 et e=1 ou 2, et
- les symboles Y, $Z^1$, $Z^2$ et $Z^3$ sont tels que définis ci-dessus,

De préférence, l'additif **X** a une viscosité dynamique à 25°C comprise entre 10 et 700 mPa.s et de préférence entre 15 et 300 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité

mesurée soit indépendante du gradient de vitesse.

Sur le plan quantitatif, il est avantageux que la teneur en additif **X** réticulant et promoteur d'accrochage soit comprise entre 0,1 et 10% en poids par rapport à la masse totale d'extrait sec des constituants non aqueux de l'émulsion **E1** et de de préférence entre 0,1 et 5%.

Selon un autre mode avantageux de l'invention, la teneur en additif **X** est comprise entre 0,1 et 10% en poids par rapport à la masse totale de l'émulsion ou du mélange d'émulsion **E1,** et de préférence comprise entre 0,1 et 5% en poids par rapport à la masse totale de l'émulsion ou du mélange d'émulsion **E1.**

L'agent d'émulsification **D** est choisi de préférence parmi le groupe constitué par les tensioactifs, les colloïdes protecteurs et leurs mélanges.

Comme colloïdes protecteurs, on peut citer les alcools polyvinyliques (PVA). A titre de tensioactif anionique, on peut mentionner les agents tensio-actifs suivants :

- les alkylesters sulfonates de formule $R^a$-CH($SO_3$M)-CO$OR^b$, où $R^a$ représente un radical alkyle en $C_8$-$C_{20}$, de préférence en $C_{10}$-$C_{16}$, $R^b$ un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine),
- les alkylsulfates de formule $R^c$O$SO_3$M, où $R^c$ représente un radical alkyle ou hydroxyalkyle en $C_{10}$-$C_{24}$, de préférence en $C_{12}$- $C_{20}$, M représentant un atome d'hydrogène ou un cation de même définition que ci- dessus, ainsi que leurs dérivés éthoxylénés (OE) et/ou propoxylénés (OP), présentant de préférence de 1 à 20 motifs OE,
- les alkylamides sulfates de formule $R^d$CONH$R^e$OS$0_3$M où $R^d$ représente un radical alkyle en $C_2$-$C_{22}$, de préférence en $C_6$-$C_{20}$, $R^e$ un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant de préférence 1 à 20 motifs OE,
- les sels d'acides gras saturés ou insaturés en $C_8$-$C_{24}$, de préférence en $C_{14}$-$C_{20}$, les alkylbenzènesulfonates en $C_9$-$C_{20}$, ainsi que leurs dérivés éthoxylénés (OE) et/ou propoxylénés (OP), présentant de préférence 1 à 20 motifs OE, - les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les mono- et dialkylphosphates, les alkyliséthionates, les alkylsuccinamates, les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un reste ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine).

A titre de tensioactifs non-ioniques on peut citer les éthers alkyliques ou aryliques de poly(oxyde d'alkylène), l'hexastéarate de sorbitan polyoxyéthyléné, l'oléate de sorbitan polyoxyéthyléné et les éthers de cétylstéaryle et de poly(oxyde d'éthylène). A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.

On peut aussi citer à titre d'exemple de tensioactifs : les tensioactifs fluorés ioniques, non ioniques ou amphotères et leurs mélanges, par exemple :

- les perfluoroalkyles,
- les perfluorobétaïnes,
- les polyfluoroalcools éthoxylés,
- les polyfluoroalkyles d'ammonium,
- les agents tensioactifs dont la partie hydrophile contient un ou plusieurs motif(s) saccharide(s) porteur(s) de cinq à six atomes de carbone et dont la partie hydrophobe contient un motif de formule $R^f(CH_2)_n$-, dans laquelle n = 2 à 20 et Rf représente un motif perfluoroalkyle de formule $C_mF_{2m+1}$, dans laquelle m = 1 à 10; et
- les polyélectrolytes présentant des groupements latéraux perfluoroalkyles gras.

Par agent tensioactif fluoré, on entend, comme cela est parfaitement connu en soi, un composé formé d'une partie perfluorocarbonée aliphatique, comprenant au moins trois atomes de carbone, et une partie hydrophile, ionique, non ionique ou amphotère. La partie perfluorocarbonée d'au moins trois atomes de carbone peut représenter, soit l'ensemble, soit une fraction seulement de la partie fluorocarbonée de la molécule. Concernant ce type de composé, on trouve dans la littérature un grand nombre de références. L'homme du métier pourra se reporter notamment aux références suivantes :

- FR-A-2 149 519, WO-A-94 21 233, US-A-3,194,767, l'ouvrage "Fluorinated Surfactants", Erik Kissa, Editeur Marcel

Dekker Inc. (1994) Chapitre 4, notamment les Tableaux 4.1 et 4.4.

On peut citer, en particulier, les produits vendus par la société Du Pont sous la dénomination ZONYL®, par exemple FSO, FSN-100, FS-300, FSD, ainsi que les tensioactifs fluorés de dénomination FORAFAC® distribués par la société DU PONT et les produits vendus sous la dénomination FLUORAD® par la Société 3M.

Parmi ces tensioactifs, on citera, en particulier, les composés perfluoroalkylés anioniques, cationiques, non-ioniques et amphotères, et parmi eux, plus particulièrement, les tensioactifs de la classe des ZONYL® commercialisés par DU Pont, commercialisés par Du Pont respectivement sous les dénominations ZONYL® FSA, ZONYL® FSO, ZONYL® FSC et ZONYL® FSK. On peut encore préciser à leur propos :

- ZONYL® FSO 100 : CAS 65545-80-4, (non-ionique) 99 à 100 %, le reste étant du 1,4-dioxane,
- ZONYL® FSN : CAS 65545-80-4, 99 à 100 %, le reste étant de l'acétate de sodium et du 1,4-dioxane,
- ZONYL® FS-300 : CAS 65545-80-4, 40 %, le reste étant de 1,4-dioxane (< 0,1%) et de l'eau
- ZONYL®FSD: CAS 70983-60-7 30 %, (cationique), le reste étant de l'hèxylèneglycol (10 %), du chlorure de sodium (3 %) et de l'eau (57 %).

On peut encore citer :

- les perfluoroalkyl bétaïnes (amphotères) telles que celle commercialisée par DU PONT sous la dénomination FORAFAC® 1157, les polyfluoroalcools éthoxylés (non-ioniques), tels que celui commercialisé par DU PONT sous la dénomination FORAFAC 1110 D, les sels polyfluoroalkyl d'ammonium (cationiques), tels que celui commercialisé par DU PONT sous la dénomination FORAFAC 1179;
- les agents tensioactifs dont la partie hydrophile contient un ou plusieurs motif(s) saccharide(s) contenant de 5 à 6 atomes de carbone (motifs dérivés de sucres comme le fructose, le glucose, le mannose, le galactose, le talose, le gulose, l'allose, l'altose, l'idose, l'arabinose, le xylose, le lyxose et/ou le ribose) et dont la partie hydrophobe contient un motif de formule $R^F(CH_2)_n$, où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les monoesters d'acides gras perfluoroalkylés et de sucres comme le sucrose, la fonction monoester pouvant être représentée par la formule $R^F(CH_2)_nC(O)$, où n peut aller de 2 à 10 et $R^F$ représente un motif perfluoroalkyle de formule $C_mF_{2m+1}$ avec m pouvant aller de 4 à 8, décrits dans journal of the american oil chemists' society (JAOCS), Vol. 69, no. 1 (janvier 1992) et choisis parmi ceux présentant les caractéristiques définies ci-dessus; et
- les polyélectrolytes présentant des groupements latéraux perfluoroalkyles gras tels que les polyacrylates présentant des groupements $R^F(CH_2)_n$ où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les polyacrylates présentant des groupements $-CH_2C_7F_{15}$ décrits dans J. Chim. Phys. (1996) 93, 887-898 et choisis parmi ceux présentant les caractéristiques définies ci-dessus.

La quantité d'agent d'émulsification est fonction du type de chacun des constituants en présence ainsi que de la nature même de l'agent d'émulsification utilisé. En règle générale, l'émulsion comprend de 0,5 à 10% en poids d'agent d'émulsification par rapport au poids total de l'émulsion (mieux encore de 0,5 à 7 % en poids).

L'eau est présente, de préférence, dans des proportions comprises entre 10 et 90% et de préférence, entre 20 et 60% en poids par rapport au poids total de l'émulsion.

Par ailleurs, de manière classique, on peut également mettre en oeuvre dans les émulsions, des adjuvants anti-mousses, des biocides, des modificateurs de rhéologie, des agents de coalescence, des agents dispersants, des agents acidifiants, neutralisants, des bases et/ou des agents épaississants. Les concentrations en de tels adjuvants sont connues de l'homme du métier.

Dans tout le présent document, on se réfèrera à des éléments de nomenclature classique pour désigner les motifs siloxyle M, D, T, Q des organopolysiloxanes. A titre d'ouvrage de référence, on peut citer : NOLL " Chemistry and Technology of Silicones ", chapitre 1.1, page 1-9, Academic Press, 1968 - 2ème édition.

Selon un mode de réalisation de l'invention, l'organopolysiloxane **A** comprend :

- au moins deux motifs siloxyle **(I.5)** de formule suivante :

$$W_aZ_bSiO_{\frac{4-(a+b)}{2}} \quad \textbf{(I.5)}$$

- dans laquelle :
  - a= 1 ou 2, b= 0, 1 ou 2 et a+b= 1, 2 ou 3 ;
  - W représente indépendamment un groupe alcényle, de préférence ayant de 2 à 6 atomes de carbone et, plus préférentiellement encore un groupe vinyle ou allyle, et
  - Z représente indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, et
  - au moins un motif siloxyle **(I.6)** de formule :

$$Z^1_aSiO_{\frac{4-a}{2}} \quad \textbf{(I.6)}$$

  dans laquelle :

    - a= 0, 1, 2 ou 3, et
    - $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle.

Selon un mode de réalisation préféré, dans la formule **(I.5),** a=1 et a+b=2 ou 3 et dans la formule **(I.6)** c=2 ou 3. Il est entendu dans les formules **(I.5)** et **(I.6)** ci-dessus que, si plusieurs radicaux W et Z sont présents, ils peuvent être identiques ou différents les uns des autres.

L'organopolysiloxane **A** présente de préférence une structure linéaire, éventuellement cyclique. Ces organopolysiloxanes linéaires ont généralement une viscosité dynamique à 25°C comprise entre 50 mPa.s et 100000 mPa.s et plus préférentiellement entre 50 mPa.s et 50000 mPa.s et encore plus préférentiellement entre 50 mPa.s et 20000 mPa.s.

Lorsqu'il s'agit d'organopolysiloxanes linéaires, ceux-ci peuvent être choisis parmi le groupe constitué par :

- les polydiméthylsiloxanes à extrémités diméthylvinylsilyles ;
- les poly(vinylméthylsiloxane-co-diméthylsiloxane) à extrémités diméthylvinylsilyles ; et
- les poly(diméthylsiloxane-co-vinylméthylsiloxane) à extrémités triméthylsilyles ;

L'organopolysiloxane **B** est de préférence un organopolysiloxane comportant au moins trois motifs siloxyles de formules **(I.7)** et éventuellement des motifs siloxyles **(I .8)** de formules suivantes :

$$H_aL^1_bSiO_{\frac{4-(a+b)}{2}} \quad \textbf{(I.7)}$$

$$Z^1_cSiO_{\frac{4-c}{2}} \quad \textbf{(I.8)}$$

dans lesquelles :

- a= 1 ou 2, b= 0, 1 ou 2 et a+b= 1, 2 ou 3 ;
- H représente un atome d'hydrogène,
- $L^1$ représente, indépendamment, un groupe hydrocarboné monovalent ayant de 1 à 30 atomes de carbone et de préférence choisi parmi le groupe constitué par les groupes alkyles ayant de 1 à 8 atomes de carbone inclus et les

groupes aryles, et encore plus préférentiellement choisi parmi le groupe constitué par un radical méthyle, éthyle, propyle, 3,3,3-trifluoropropyle, xylyle, tolyle et phényle, et

- c= 0, 1, 2 ou 3,
- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle

La viscosité dynamique de l'organopolysiloxane **B** est supérieure ou égale à 5, de préférence supérieure ou égale à 10 et, plus préférentiellement encore, est comprise entre 20 et 1000 mPa.s.

L'organopolysiloxane **B** peut présenter une structure linéaire, ramifiée ou cyclique. Le degré de polymérisation est supérieur ou égal à 2. Plus généralement, il est inférieur à 5 000.

Des exemples de motifs hydrogénosiloxyle de formule **(I.7)** sont :

- M' : $H(CH_3)_2SiO_{1/2}$,
- D' : $HCH_3SiO_{2/2}$, et
- $D'^{Ph}$ avec groupement phénylé: $H(C_6H_5)SiO_{2/2}$.

Des exemples utiles d'organopolysiloxane **B** sont :

- $M'_2DxD'y$ : les diméthylpolysiloxanes à extrémités hydrogénodiméthylsilyle, poly(diméthylsiloxane) (méthylhydrogénosiloxy) α,ω-diméthylhydrogéno-siloxane,
- $M_2D_xD'_y$ : les copolymères à motifs diméthyl-hydrogénométhylpolysiloxanes (diméthyl) à extrémités triméthylsilyle,
- $M'_2D_xD'_y$ : les copolymères à motifs diméthyl-hydrogénométhylpolysiloxanes à extrémités hydrogénodiméthylsilyle,
- $M_2Dx^1$ : les hydrogénométhylpolysiloxanes à extrémités triméthylsilyle,
- $D'_4$ : les hydrogénométhylpolysiloxanes cycliques,

avec x et y étant des nombres entiers ou décimaux (valeur moyenne) variant suivant la structure utilisée, déterminés suivant les techniques usuelles du domaine technique. Par exemple x et y peuvent varier entre les nombres 1 et 500.

Les catalyseurs de polyaddition C sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur de polyaddition **C** généralement préféré est le platine. Dans ce cas, la quantité pondérale de polyaddition **C,** calculée en poids de platine-métal, est généralement comprise entre 2 et 400 ppm, de préférence entre 5 et 200 ppm basée sur le poids total des composants de l'émulsion en omettant l'eau (extrait sec).

Selon un mode de réalisation particulier, les quantités des constituants sont telles que le rapport molaire [≡SiH]/[≡SiAlcényle] est compris entre 0,5 et 7 et de préférence entre 1 et 5 avec :

- [≡SiH]= nombre total de mole de motifs siloxyles comprenant un atome d'hydrogène liés au silicium, et
- [≡SiAlcényle] = nombre total de mole de motifs siloxyles comprenant un radical alcényle liés au silicium.

L'inhibiteur de réticulation **F** (ou ralentisseur de la réaction d'addition) peut, quant à lui, être choisi parmi les composés suivants :

- un organopolysiloxane, avantageusement cyclique, et substitué par au moins un alcényle, le tétraméthylvinyltétrasiloxane étant particulièrement préféré,
- la pyridine,
- les phosphines et les phosphites organiques,
- les amides insaturés,
- les maléates alkylés
- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

$$(R^1)(R^2)C(OH) - C \equiv CH$$

formule dans laquelle :

- $R^1$ est un radical alkyle linéaire ou ramifié, ou un radical phényle ;
- $R^2$ est un atome d'hydrogène, un radical alkyle linéaire ou ramifié, ou un radical phényle ;
- les radicaux $R^1$, $R^2$ et l'atome de carbone situé en a de la triple liaison pouvant éventuellement former un cycle ; et
- le nombre total d'atomes de carbone contenu dans $R^1$ et $R^2$ étant d'au moins 5, de préférence de 9 à 20.

Lesdits alcools sont, de préférence, choisis parmi ceux présentant un point d'ébullition supérieur à 250°C. On peut citer à titre d'exemples :

- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools $\alpha$-acétyléniques sont des produits du commerce.

Un tel inhibiteur de réticulation est présent à raison de 4 000 ppm au maximum, de préférence à raison de 100 à 3500 ppm par rapport au poids total des constituants de l'émulsion en excluant le poids de l'eau (extrait sec).

L'agent G de fixation du pH peut avantageusement être un un système tampon qui, de manière plus avantageuse encore, comporte le couple $HCO_3^-$ / $CO^{2-}{}_3$ et/ou $H_2PO_4^-$/$HPO_4^{2-}$. On peut aussi se référer à la demande PCT Internationale WO99/35181.

Comme additif de formulation **H,** on peut citer :

- un agent bactéricide comme par exemple l'acide sorbique,
- un agent antigel et/ou de mouillage comme par exemple les glycols tels que le propylène ou l'éthylène glycol,
- un antimousse,
- une charge de préférence minérale choisie parmi les matières siliceuses ou non, les charges siliceuses étant plus particulièrement préférées,
- un colorant ou pigment ;
- un acidifiant tel que par exemple acide acétique.

Concernant les charges siliceuses, il convient de noter qu'elles peuvent jouer le rôle de charge renforçante ou semi-renforçante. Les charges siliceuses renforçantes sont choisies parmi les silices colloïdales, les poudres de silice de combustion et de précipitation ou leur mélange. Ces poudres présentent une taille moyenne de particule généralement inférieure à 0,1 mm et une surface spécifique BET supérieure ou égale à 50 $m^2$/g, de préférence comprise entre 150 et 350 $m^2$ /g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium, l'oxyde de zinc, le mica, le talc, l'oxyde de fer, le sulfate de baryum et la chaux éteinte. Ces charges ont une granulométrie généralement comprise entre 0,001 et 300 mm et une surface BET inférieure à 100 $m^2$/g.

L'émulsion silicone aqueuse **E1** peut également inclure un autre additif promoteur d'accrochage. Ce dernier est de préférence choisi parmi les silanes époxy-fonctionnels, de préférence dans le groupe comprenant :

- le (3,4-époxycyclohexyl)éthyltriéthoxy-silane [Coatosil® 1770],
- le Tris(3-(triméthoxysilyl)propyl)isocyanurate [A-Link 597],
- le (gammaglycidoxypropyle)triméthoxysilane [Dynasilan® GLYMO],
- le (gamma méthacryloxypropyle)triméthoxysilane [Dynasilan® MEMO],
- des composés silicones comportant à la fois des groupements SiVi et des groupements époxy fonctionnels, et
- leurs mélanges.

Les concentrations adaptées de cet autre additif promoteur d'accrochage sont, par exemple, comprises entre 0,5 et 5%, de préférence entre 1 et 3% en poids par rapport au poids total des constituants de l'émulsion en excluant le poids de l'eau (extrait sec).

La préparation de l'émulsion aqueuse silicone selon l'invention, utilisable notamment comme base d'enduction pour la réalisation de revêtements anti-adhérents et hydrofuges, consiste simplement à mélanger les constituants selon l'invention à l'aide de moyens et de méthodologies de mélange connus de l'homme de l'art.

Le dernier objet de l'invention concerne l'émulsion silicone aqueuse **E1** réticulable en un élastomère silicone par des réactions de polyaddition selon l'invention et telle que décrite ci-dessus.

**EXEMPLES**

I- Préparation des additifs d'accrochage X :

Différents additifs ont été synthétisés constitués de :

- n motifs $YCH_3SiO_{2/2}$
- m motifs $HCH_3SiO_{2/2}$
- p motifs $(CH_3)_2SiO_{2/2}$
- 2 motifs $(CH_3)_3Si_{1/2}$

où Y est le groupement époxy de formule suivante :

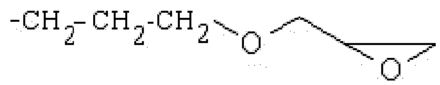

**Y**

**Additif X1**

Dans un réacteur de 1 L sous azote, on introduit 181,0 g de toluène. Le milieu est placé sous agitation et chauffé à 85°C. Lorsque la température est atteinte, 10,2 mg d'un complexe de platine carbène, commercialisé par Umicore sous le nom commercial Umicore HS432® est introduit. Puis, un mélange d'allyl glycidyl ether (AGE) (236,8 g, 2,07 mol) et d'un polyméthylhydrogénosiloxane **H2** avec 9 motifs $(CH_3)HSiO_{2/2}$ et deux motifs terminaux $(CH_3)_3SiO_{1/2}$ (363,2 g, SiH = 4,77 mol) est ajouté goutte à goutte pendant 4 heures. Après retour à température ambiante, le milieu réactionnel est dévolatilisé à 25-30°C sous 0-3 mbar pendant 30 min puis à 85°C (consigne) sous 1 mbar pendant 3h pour conduire à une huile silicone fonctionnalisée composée de n motifs $YCH_3SiO_{2/2}$ , m motifs $HCH_3SiO_{2/2}$ et deux motifs $(CH_3)_3Si_{1/2}$ avec les caractéristiques suivantes : n+m = 9 ; [SiH] = 586 mmol/100g ; [Epoxy] = 291 mmol/100g ; Viscosité = 32 mPa.s.

**Additif X2**

Dans un ballon de 500 mL sous azote, on introduit 50,3 g de toluène et 472 mg de Pt/C. Ce mélange est placé sous agitation magnétique et chauffé à 90°C. Un mélange d'allyl glycidyl ether (AGE) (46,4 g, 0,40 mol) et d'un polyméthylhydrogénosiloxane **H2** avec 9 motifs $(CH_3)HSiO_{2/2}$ et deux motifs terminaux $(CH_3)_3SiO_{1/2}$ (100,22 g, SiH = 1,35 mol) est ajouté goutte à goutte pendant 47,5 min. Lorsque l'ajout est terminé, le chauffage est maintenu pendant une nuit. Après retour à température ambiante, le milieu réactionnel est filtré sur carton et téflon, puis traité au noir 2S à 60°C pendant 6h puis à nouveau filtré. Le traitement au noir est répété. Le milieu réactionnel est ensuite dévolatilisé à 80°C (consigne) sous 1 mbar pendant 3h pour conduire à une huile silicone fonctionnalisée composée de n motifs $YCH_3SiO_{2/2}$, m motifs $HCH_3SiO_{2/2}$ et deux motifs $(CH_3)_3Si_{1/2}$ avec les caractéristiques suivantes : n+m = 9, [SiH] = 720 mmol/100g ; [Epoxy] = 219 mmol/100g ; Viscosité = 27 mPa.s.

**Additif X3**

Dans un ballon de 500 mL sous azote, on introduit 105,1 g de toluène et 11 mg de d'un complexe de platine carbène, commercialisé par Umicore sous le nom commercial Umicore HS432®. Ce mélange est placé sous agitation magnétique et chauffé à 85°C. Un mélange d'allyl glycidyl ether (AGE) (249,2 g, 2,18 mol) et de polyméthylhydrogénosiloxane **H3** comprenant 20 motifs $(CH_3)HSiO_{2/2}$ et deux motifs terminaux $(CH_3)_3SiO_{1/2}$ (302,6 g, SiH = 4,52 mol) est ajouté goutte à goutte pendant 3 heures. Lorsque l'ajout est terminé, l'ampoule d'addition est rincée avec 45,4 g de toluène et le chauffage est maintenu pendant 2 heures. Après retour à température ambiante, le milieu réactionnel est dévolatilisé à 92°C sous 1 mbar pendant 3 heures pour conduire à une huile silicone fonctionnalisée (449,0g) composée

de n motifs $YCH_3SiO_{2/2}$, m motifs $HCH_3SiO_{2/2}$ et deux motifs $(CH_3)_3Si_{1/2}$ avec les caractéristiques suivantes : n+m = 20, [SiH] = 568 mmol/100g ; [Epoxy] = 324,3 mmol/100g ; Viscosité = 186 mPa.s.

Tableau 1 : Récapitulatif des additifs d'accrochage :

| Additif d'accrochage | Nombre total de motifs siloxyles | Nombre motifs $(CH_3)_2SiO_{2/2}$ | [SiH] mmol/ 100g | [Epoxy] mmol/ 100g | [SiH]/ [Epoxy] |
|---|---|---|---|---|---|
| X1 | 11 | 0 | 586 | 291 | 2,0 |
| X2 | 11 | 0 | 720 | 219 | 3,3 |
| X3 | 22 | 0 | 568 | 324 | 1,8 |

II) Constituants des émulsions

- 1-éthynyl-1-cyclohexanol (ECH, inhibiteur de réticulation F1)
- Mélange POS-Vi A30 contenant :

    i) 75% en poids d'un polydiméthylsiloxane **A1** (viscosité 450mPa.s) portant des vinyles en bout de chaîne et une moyenne de 9 vinyles dans la chaîne,
    ii) 25% en poids d'un polydiméthylsiloxane **A2** (viscosité 10000 mPa.s) ne portant que des vinyles en bout de chaîne
    iii) 3000 ppm 1-éthynyl-1-cyclohexanol (ECH, inhibiteur de réticulation F1)

- Mélange POS-Vi A88 contenant :

    i) 88% en poids d'un polydiméthylsiloxane A1 (viscosité 450mPa.s) portant des vinyles en bout de chaîne et une moyenne de 9 vinyles dans la chaîne,
    ii) 12% environ d'une huile vinylée de 600 mPa.s ne portant que des vinyles en bout de chaîne, et
    iii) 2600 ppm 1-éthynyl-1-cyclohexanol (ECH, inhibiteur de réticulation F1)

- Mélange POS-Vi A67 contenant :

    i) Un polydiméthylsiloxane A3 de structure moyenne $M^{Vi}$ $D_{109}$ $D^{Vi}$ $M^{Vi}$, et
    ii) 0,15% en poids de 1-éthynyl-1-cyclohexanol (ECH, inhibiteur de réticulation F1)
    Avec $M^{Vi}$ : $(vinyl)(CH_3)_2SiO_{1/2}$, $D^{Vi}$= $(vinyl)(CH_3)SiO_{2/2}$

- 621V600 : polydiméthylsiloxane A3 (viscosité 600mPa.s) portant uniquement les vinyles en bout de chaîne ;
- **ADD X1** : Additif d'accrochage **X1**
- XL : poly(hydrogénométhylsilyl)diméthylsiloxane B1 de structure moyenne : M $D'_{51}$ $D_{20}$ M.
  Avec : D' = $H(CH_3)SiO_{2/2}$
- PVA : Alcool polyvinylique grade Poval 26-88 de Kuraray, poly(acétate de vinyle) partiellement hydrolysé à hauteur de 88%.
- TR15 : Tensio-actif (Rhodasurf TR15/40 de la société Solvay) : alcool gras éthoxylé tridécylique comportant en moyenne 15 unités oxyde d'éthylène, et fourni sous forme de solution aqueuse à 40% massique.
- ROX : Tensioactif qui est un alcool gras (chaîne de 13 carbones) éthoxylé (8 motifs éthoxy), commercialisé sous la dénomination ROX® par la Société SOLVAY
- G1 : Agent de fixation du pH : $NaHCO_3$ ;
- H1 : additif de formulation acide sorbique.
- Pt : Catalyseur de polyaddition au platine.

III) Préparation des pré-émulsions

Tableau 2 : Préparation des pré-émulsions (en partie en poids)

| Emulsions | E02 | E08 | E03 | E66 | TW2416 | TW2417 | TW2418 |
|---|---|---|---|---|---|---|---|
| POS-Vi A67 | 36,54 | 0,00 | 0,00 | 0,00 | 0,00 | 0,00 | 0,00 |
| POS-Vi A88 | 0,00 | 33,47 | 0,00 | 0,00 | 0,00 | 0,00 | 0,00 |
| 621V600 | 0,00 | 0,00 | 39,60 | 0,00 | 0,00 | 0,00 | 0,00 |
| POS-Vi A30 | 0,00 | 0,00 | 0,00 | 0,00 | 38,67 | 38,81 | 0,00 |
| ADD X1 | 0,00 | 0,00 | 0,00 | 0,00 | 0,00 | 0,00 | 38,61 |
| XL | 2,60 | 5,42 | 0,00 | 40,93 | 0,00 | 0,00 | 0,00 |
| PVA | 1,99 | 2,06 | 2,07 | 2,09 | 1,97 | 1,96 | 1,98 |
| TR15 | 0,00 | 0,00 | 0,00 | 0,00 | 0,085 | 0,083 | 0,084 |
| ROX | 0,00 | 0,33 | 0,00 | 0,00 | 0,00 | 0,00 | 0,00 |
| Water | 58,83 | 58,67 | 57,38 | 56,95 | 59,22 | 59,09 | 59,27 |
| H1 | 0,04 | 0,04 | 0,01 | 0,04 | 0,055 | 0,055 | 0,056 |
| G1 | 0,00 | 0,00 | 0,91 | 0,00 | 0,00 | 0,00 | 0,00 |
| Pt | 0,00 | 0,00 | 0,03 | 0,00 | 0,00 | 0,00 | 0,00 |

Les pré-émulsions TW2416 et TW2417 sont obtenues de la façon suivante :

Dans un réacteur agité de 2 litres muni d'une ancre raclante et d'une contre-pale, on introduit le PVA, préalablement dissous à raison de 10% dans de l'eau, le tensioactif Rhodasurf TR15/40 et l'acide sorbique. Après quelques minutes d'agitation à 100 rpm, l'agitation est maintenue et le mélange POS-Vi A30 est introduit progressivement durant 1 heure, puis l'agitation est prolongée durant 1h30 à l'aide d'un rotor-stator de type Ultra-turrax à la vitesse de 11000 rpm. Enfin, le reste de l'eau est introduit progressivement pendant environ 2h. L'émulsion obtenue présente une granulométrie moyenne d'environ 1,0μm, mesurée par diffraction laser au moyen d'un granulomètre de type Malvern Mastersizer 3000.

La pré-émulsion TW2418 est obtenue de la façon suivante :

Dans un réacteur agité de 250mL muni d'une ancre raclante et d'une contre-pale, on introduit le PVA, préalablement dissous à raison de 10% dans de l'eau, le tensioactif Rhodasurf TR15/40 et l'acide sorbique. Après quelques minutes d'agitation à 50 rpm, un balayage d'azote est établi dans le ciel du réacteur, l'agitation est maintenue et l'additif X1 est introduit progressivement durant 35mn, puis l'agitation est prolongée durant 30mn. Enfin, le reste de l'eau est introduit progressivement pendant environ 30mn. L'émulsion obtenue présente une granulométrie moyenne d'environ 1,1μm, mesurée par diffraction laser au moyen d'un granulomètre de type Malvern Mastersizer 3000.

IV) Préparation des émulsions

Les émulsions sont formulées par mélange des pré-émulsions décrites dans le Tableau 2 de sorte que l'on obtienne un « bain » d'enduction. Les formules exprimées en parties (poids) sont rassemblées dans le Tableau 3 ci-dessous :

Tableau 3 : Préparation pré-émulsions (en parties en poids)

| Pré-émulsions | Emulsion A Comparatif | Emulsion B Comparatif | Emulsion C Invention | Emulsion D invention | Emulsion E Comparatif |
|---|---|---|---|---|---|
| E02 | | | | | 100,0 |
| E08 | 100,0 | | | | |
| TW2416 | | 100,0 | 100,0 | 100,0 | |
| TW2418 | | | 2,0 | 5,0 | |

(suite)

| Pré-émulsions | Emulsion A Comparatif | Emulsion B Comparatif | Emulsion C Invention | Emulsion D invention | Emulsion E Comparatif |
|---|---|---|---|---|---|
| E66 | | 15,0 | 14,0 | 12,5 | |
| E03 | 16,5 | 20,5 | 20,5 | 20,7 | 16,7 |
| Eau* | 105,0 | 45,0 | 45,0 | 45,0 | 185,0 |
| (*) La quantité d'eau est déterminée dans le but d'ajuster le dépôt de silicone au cours des étapes de mise en œuvre ultérieures. | | | | | |

V) Mise en oeuve pour préparation de revêtement silicone sur support

Un film de PET (Toray 6001) est revêtu avec les émulsions A à E (décrites dans le Tableau 3), séché à 210°C à la vitesse de 25 m/min dans une sécherie de 6 mètres de longueur. Le dépôt de silicone est déterminé par fluorescence X ; le dépôt visé est de 0.5 g/$m^2$ environ. Préalablement à l'enduction, le film est traité ou non, en ligne, au moyen d'un traitement Corona de puissance 700 W par 40 cm de laize.

VI) Caractérisation des revêtements silicone

**Tests effectués sur les supports enduits de revêtements silicones anti-adhérents**

**Dépôt** : Contrôle du dépôt silicone enduit sur la surface par analyse par Fluorescence X du silicium (Lab-X 3000 d'Oxford). Un tube à rayon X excite la couche électronique des atomes de silicium, ce qui provoque une émission de rayons X proportionnelle à la quantité de silicium excité. Cette valeur ou nombre de coups est transformée par calcul (en utilisant la droite d'étalonnage) en quantité de silicone.

**Smear** : Contrôle qualitatif de la polymérisation de surface par la méthode de la trace au doigt qui consiste à :

- Disposer de l'échantillon de support enduit de silicone à contrôler sur une surface plane et rigide ;
- Faire une trace avec le bout du doigt en appuyant modérément mais nettement ; et
- Examiner à l'oeil la trace ainsi faite, de préférence en lumière rasante. On peut voir ainsi la présence d'une trace même très légère par la différence de brillance de la surface. L'appréciation est qualitative. On quantifie le « Smear » avec les notations suivantes :

  A : très bon, pas de trace au doigt
  B : un peu moins bon, trace à peine visible
  C : trace nette
  D : trace très nette et aspect huileux de la surface, produit à peine polymérisé, soit une note de A à D, du meilleur résultat au plus mauvais.

**Rub-off** : Contrôle de l'aptitude du silicone à adhérer sur le support flexible par gommage en aller-retour au doigt qui consiste à :

- Disposer l'échantillon de support enduit de silicone à contrôler sur une surface plane et rigide, la silicone étant sur la face supérieure ;
- Faire 10 Aller et Retour avec le bout du doigt (sur une longueur de 10 cm environ) en appuyant modérément mais nettement ;
- Examiner à l'œil l'apparition du gommage. Le gommage correspond à l'apparition d'une fine poudre blanche ou des petites boulettes qui roulent sous le doigt.

L'appréciation est qualitative. On quantifie le gommage avec les notations suivantes :

- 10 : très bon, pas d'apparition de gommage au bout de 10 A-R
- 1 : très mauvais, gommage dès le premier aller

La note correspond au nombre d'aller-retour (de 1 à 10) à partir duquel un gommage apparaît.
Soit une note de 1 à 10, du plus faible au meilleur résultat.

**Démouillage** : Appréciation du degré de polymérisation de la couche silicone par évaluation du transfert de silicone sur un adhésif mis en contact avec l'enduction à l'aide d'une encre de tension de surface normée. La méthode est la suivante :

- Sélectionner un échantillon d'environ 20 x 5 cm du papier enduit silicone à caractériser, pris dans le sens du déroulement (sens machine) ;
- Découper une longueur de ≈ 15 cm de ruban adhésif, puis le déposer côté adhésif sur le papier à contrôler, sans plis, en exerçant 10 fois une pression par glissement du doigt sur la longueur du ruban adhésif. (Ruban adhésif « Scotch » de 3 M, référence 610, largeur : 25 mm) ;
- Enlever le ruban adhésif et le déposer à plat, partie adhésivée vers le haut ;
- Déposer sur la partie adhésivée du ruban, avec un coton tige (à usage unique), une trace d'encre sur une longueur d'environ 10 cm (encres de marque SHERMAN ou FERARINI et BENELI de tension de surface ≈ 30 dynes/cm et de viscosité 2 à 4 mPa/s). Déclencher immédiatement le chronomètre ;
- On considère que l'on entre dans la phase du phénomène de démouillage lorsque le trait d'encre change d'aspect, arrêter alors le chronomètre ;
- La dépose de l'encre sur la partie adhésivée du ruban doit se faire dans les 2 minutes suivant l'enduction silicone ;
- Si le résultat obtenu est < 10 secondes, on estime qu'il y a migration de silicone sur l'adhésif, et que la polymérisation n'est pas complète ;
- On donnera une note de 0 à 10 correspondant au temps écoulé en secondes avant l'observation du phénomène de démouillage ;
- Si le résultat obtenu est 10 secondes, on estime que la polymérisation est complète. Dans ce cas, on donnera une note de 10 signifiant que le résultat est très bon ;
- Noter la note obtenue et l'encre utilisée (nom, marque, tension de surface, viscosité).

**Extractibles** : Mesure de la quantité de silicone qui n'est pas greffée au réseau formé lors de la polymérisation. Ces silicones sont extraits du film par immersion d'échantillon dès la sortie machine dans la MIBK durant 24h minimum. Ceci est mesuré par spectroscopie à absorption de flamme. Il doit être rappelé que l'on recherche un faible taux (%) d'extractibles (signe d'une polymérisation poussée).

**Préparation d'articles multicouches auto-adhésifs**

Un support adhésivé normé TESA7475 (support = PET - adhésif = acrylique) ou TESA4651 est complexé sur le liner silicone produit ci-dessus (= support enduit d'un revêtement silicone obtenu par réticulation sous UV) afin de former un article multicouche.

**Force de Release** : Les mesures de forces de pelage ont été effectuées avec l'adhésif normé TESA 7475. Les éprouvettes de l'article multicouche (adhésif en contact avec surface silicone) ont été conservées 1 jour à 23°C, 1 jour à 70°C et 7 jours à 70°C dans les conditions de pression requises, puis testées à faible vitesse de pelage selon le test FINAT 3 (FTM 3) connu de l'homme du métier.

La force de décollement s'exprime en g/cm et se mesure à l'aide d'un dynamomètre, après mise sous pression des échantillons soit à température ambiante (23°C) soit à plus haute température pour des tests de vieillissement accéléré (en général 70°C).

Force de décollement : le test utilisé correspond aux normes Finat n°3 et 10 de l'édition n°5 de 1999. Ce test est réalisé 4 jours après la réticulation ("off-line") avec des rubans adhésifs commercialisés sous la marque Tesa® 7475 à 23°C (base acrylique), Tesa® 7476 à 70°C (base caoutchouc).

Tableau 4.

| Emulsion enduite | Traitement Corona | Dépôt de silicone (g/m$^2$) | Démouillage | Smear | Extractibles (%) |
|---|---|---|---|---|---|
| A (Comparatif) | non | 0,58 | 10 | A | 0,2 |
| A (Comparatif) | oui | 0,58 | 10 | A | 0,5 |
| B (Comparatif) | non | 0,55 | 10 | B | 0,7 |
| B (Comparatif) | oui | 0,55 | 10 | B | 0,5 |
| C (Invention) | non | 0,43 | 10 | A | 0,3 |
| C (Invention) | oui | 0,43 | 10 | A | 0,5 |
| D (Invention) | non | 0,57 | 10 | A | 0,5 |

(suite)

| Emulsion enduite | Traitement Corona | Dépôt de silicone (g/m$^2$) | Démouillage | Smear | Extractibles (%) |
|---|---|---|---|---|---|
| D (Invention) | oui | 0,57 | 10 | A | 0,0 |
| E (Comparatif) | non | 0,48 | 1 | B | 1,1 |
| E (Comparatif) | oui | 0,48 | 1 | A | 2,8 |

Anti-adhérence en fonction du vieillissement (24 heures et 10 jours).

Tableau 5. Force de Release

| | | Tesa 7475 -23°C-70g/cm$^2$-(glcm) | | Tesa 4651 -23°C-70g/cm$^2$-(g/cm) | |
|---|---|---|---|---|---|
| Emulsion enduite | Traitement Corona du support | 24 heures | 10 jours | 24 heures | 10 jours |
| A (Comparatif) | non | 18 | 18 | 22 | 18 |
| A (Comparatif) | oui | 19 | 19 | 19 | 19 |
| B (Comparatif) | non | 20 | 18 | 19 | 18 |
| B (Comparatif) | oui | 19 | 19 | 19 | 19 |
| B (Comparatif) | non | 20 | 21 | 19 | 19 |
| C (Invention) | oui | 20 | 20 | 19 | 9 |
| D (Invention) | non | 44 | 44 | 25 | 26 |
| D (Invention) | oui | 21 | 23 | 19 | 18 |
| E (Comparatif) | non | 21 | 23 | 17 | 17 |
| E (Comparatif) | oui | 21 | 23 | 17 | 16 |

Accrochage :

Après enduction des émulsions A, B, C, D et E, les revêtements sont conditionnés en atmosphère contrôlée, à 70% d'humidité relative et à 40°C. Ils ensuite testés du point de vue de leur résistance à l'abrasion (Rubb off) ; pour ce faire, on frotte avec le doigt la surface et l'on enregistre un nombre de frottement au bout duquel il apparaît une trace ; ce nombre sert de note. Dans le cas où 10 passages ne font apparaître aucune trace, on met la note maximale de 10. Cette mesure est réitérée plusieurs fois dans le temps (vieillissement).

Tableau 6 - Rub-off

| | | Temps de vieillissement | | |
|---|---|---|---|---|
| Emulsion enduite | Traitement Corona du support | 0 jour | 3 jours 40°C et 70% HR | 3 jours 40°C et 70% HR |
| A (Comparatif) | non | 10 | 10 | **5** |
| A (Comparatif) | oui | 10 | 10 | **9** |
| B (Comparatif) | non | 10 | 10 | 10 |
| B (Comparatif) | oui | 10 | 10 | 10 |
| C (Invention) | non | 10 | 10 | 10 |
| C (Invention) | oui | 10 | 10 | 10 |
| D (Invention) | non | 10 | 10 | 10 |
| D (Invention) | oui | 10 | 10 | 10 |
| E (Comparatif) | non | 5 | 2 | 2 |
| E (Comparatif) | oui | 10 | 10 | 10 |

Remarque : La transparence du revêtement obtenu avec l'émulsion C est excellente.

## Revendications

1. Procédé de réalisation d'un revêtement hydrofuge et anti-adhérent sur un support **S,** de préférence sur un support **S** souple en papier ou en film polymère synthétique, comprenant les étapes suivantes :

    1) on prépare une émulsion silicone aqueuse **E1** réticulable en un élastomère silicone par des réactions de polyaddition comprenant :

    - au moins un organopolysiloxane **A** présentant par molécule au moins deux groupements fonctionnels insaturés de type alcényle en $C_2$-$C_6$, liés au silicium,
    - au moins un organopolysiloxane **B** présentant par molécule au moins trois atomes d'hydrogène liés au silicium,
    - au moins un catalyseur de polyaddition **C,**
    - au moins un agent d'émulsification **D,**
    - de l'eau,
    - éventuellement au moins un inhibiteur de réticulation **F,**
    - éventuellement au moins un agent **G** de fixation du pH choisi de manière à maintenir le pH de l'émulsion **E1** entre 5 et 9, de préférence entre 5,5 et 8,5 et plus préférentiellement encore entre 6 et 8,
    - éventuellement au moins un additif de formulation **H,** et
    - au moins un additif **X** qui est un organopolysiloxane linéaire comprenant des motifs siloxyles **(1.1)** à **(I.3)** de formules suivantes :

    $$Y_aZ^1_bSiO_{\frac{4-(a+b)}{2}} \qquad \textbf{(I.1)}$$

    $$Z^2_3SiO_{\frac{1}{2}} \qquad \textbf{(I.2)}$$

    $$H_dZ^3_eSiO_{\frac{4-(d+e)}{2}} \qquad \textbf{(I.3)}$$

    et ne comprenant pas de motifs de formule **(I.4):**

    $$Z^2_2SiO_{\frac{2}{2}} \qquad \textbf{(I.4)}$$

    dans lesquelles :

    - a=1 et b=1 ou 2 ;
    - d=1 et e=1 ou 2 ;
    - le symbole Y représente un radical comprenant un groupe hydrocarboné ayant de 2 à 20 atomes de carbone et une fonction époxy, avec éventuellement un ou plusieurs hétéroatomes tel qu'un atome d'oxygène, de préférence le symbole Y est choisi parmi les radicaux constitués par le groupe : alkylglycidyléther, époxyalkyle linéaire, ramifié ou cyclique, époxyalcényle linéaire, ramifié ou cyclique et glycidyl-ester d'acide carboxylique, et
    - les symboles $Z^1$, $Z^2$ et $Z^3$ identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle,

propyle, 3,3,3-trifluoropropyle, xylyle, tolyle et phényle,

avec les conditions suivantes :
- l'additif **X** comprend, par molécule, au moins deux motifs siloxyles **(I.1)** porteurs de groupes hydrocarbonés époxyfonctionnels, au moins trois motifs siloxyles **(I.3)** porteurs de groupes hydrogénosiloxyles et un nombre de motifs siloxyles total **N** compris entre 7 et 30, et
- l'additif **X** a une teneur en motifs siloxyles **(1.1)** supérieure ou égale à 200 mmol pour 100 g d'additif **X** ;

2) on applique sur au moins une face dudit support souple **S** l'émulsion silicone aqueuse **E1,** et
3) on élimine l'eau et on effectue la réticulation de préférence par chauffage à une température comprise entre 80°C et 220°C.

**2.** Procédé selon la revendication 1 dans lequel à l'étape 1) l'émulsion silicone aqueuse **E1** est préparée en mélangeant :

- une première « pré-émulsion » comprenant les organopolysiloxanes **A** et **B,** l'agent d'émulsification **D,** l'inhibiteur de réticulation **F,** de l'eau, éventuellement au moins un agent **G** de fixation du pH choisi de manière à maintenir le pH de l'émulsion **E1** entre 5 et 9 et éventuellement au moins un additif de formulation **H,**
- une deuxième « pré-émulsion » catalysante comprenant le catalyseur de polyaddition **C,** l'agent d'émulsification **D,** l'organopolysiloxane, de l'eau, éventuellement au moins un agent **G** de fixation du pH choisi de manière à maintenir le pH de l'émulsion **E1** entre 5 et 9 et éventuellement au moins un additif de formulation **H,** et
- une troisième « pré-émulsion » comprenant l'additif **X,** l'agent d'émulsification **D**, de l'eau, éventuellement au moins un agent **G** de fixation du pH choisi de manière à maintenir le pH de l'émulsion **E1** entre 5 et 9 et éventuellement au moins un additif de formulation **H.**

**3.** Procédé selon la revendication 1 dans lequel l'additif X a une teneur en motifs siloxyle **(1.1)** supérieure ou égale à 200 mmol pour 100 g d'additif **X** et une teneur en motifs siloxyle **(I.3)** supérieure ou égale à 300 mmol pour 100 g d'additif **X.**

**4.** Procédé selon la revendication 1 dans lequel l'additif **X** a un nombre **N1** de motifs siloxyle **(1.1)** et un nombre **N3** de motifs siloxy **(I.3)** qui répondent aux conditions suivantes :

- $2 \leq$ **N1** $\leq 10$ et de préférence $3 \leq$ **N1** $\leq 7$, et
- $3 \leq$ **N3** $\leq 20$ et de préférence $5 \leq$ **N3** $\leq 20$.

**5.** Procédé selon la revendication 1 dans lequel l'additif **X** a un nombre total **N** de motifs siloxyle compris entre 7 et 25 bornes incluses et encore plus préférentiellement entre 7 et 15.

**6.** Procédé selon la revendication 1 **caractérisée en ce que** pour le motif siloxyle **(1.1)** de l'additif X, le symbole **Y** est choisi parmi le groupe constitué par les groupements **(R-1)** à **(R-6)** de formules suivantes :

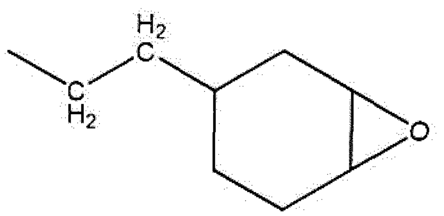

**(R-1)**

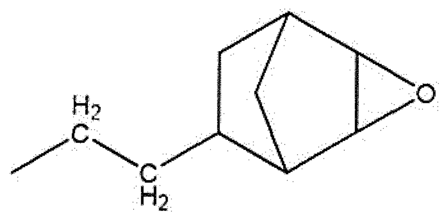

**(R-2)**

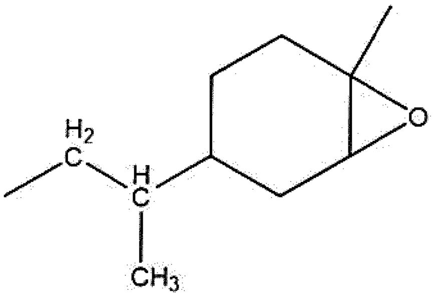

**(R-3)**

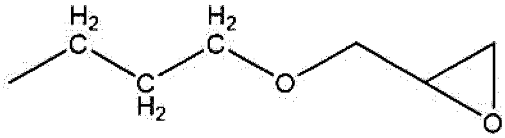

**(R-4)**

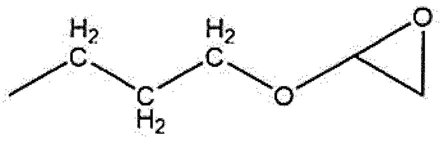

**(R-5)**

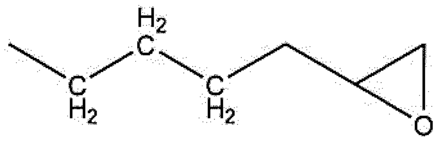

**(R-6)**

**7.** Procédé selon la revendication 1 dans lequel l'émulsion ou le mélange d'émulsion **E1** comprend au moins un organopolysiloxane **A** comprenant :

- au moins deux motifs siloxyle **(I.5)** de formule suivante :

$$W_a Z_b SiO_{\frac{4-(a+b)}{2}} \quad \textbf{(I.5)}$$

- dans laquelle :

  - a= 1 ou 2, b= 0, 1 ou 2 et a+b= 1, 2 ou 3 ;
  - W représente indépendamment un groupe alcényle, de préférence ayant de 2 à 6 atomes de carbone et, plus préférentiellement encore un groupe vinyle ou allyle, et
  - Z représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle, et

- au moins un motif siloxyle **(I.6)** de formule :

$$Z^1_a SiO_{\frac{4-a}{2}} \quad \textbf{(I.6)}$$

dans laquelle :

- a= 0, 1, 2 ou 3, et
- $Z^1$ représente, indépendamment un groupe hydrocarboné monovalent ayant de 1 à 30 atomes de carbone et de préférence choisi parmi le groupe constitué par les groupes alkyles ayant de 1 à 8 atomes de carbone inclus et les groupes aryles, et encore plus préférentiellement choisi parmi le groupe constitué par un radical méthyle, éthyle, propyle, 3,3,3-trifluoropropyle, xylyle, tolyle et phényle.

**8.** Procédé selon la revendication 1 dans lequel la teneur en additif **X** est comprise entre 0,1 et 10% en poids par rapport à la masse totale de l'émulsion ou du mélange d'émulsion **E1,** et de préférence comprise entre 0,1 et 5% en poids par rapport à la masse totale de l'émulsion ou du mélange d'émulsion **E1.**

9. Procédé selon la revendication 1 dans lequel l'additif **X** a une viscosité dynamique à 25°C mesurée en accord avec le procédé énoncé dans la description comprise entre 10 et 700 mPa.s et de préférence entre 15 et 300 mPa.s.

10. Procédé selon la revendication 1 dans lequel l'agent d'émulsification D est choisi parmi le groupe constitué par les tensioactifs, les colloïdes protecteurs et leurs mélanges.

11. Emulsion silicone aqueuse **E1** réticulable en un élastomère silicone par des réactions de polyaddition telle que décrite selon l'une quelconque des revendications 1 à 10.

## Patentansprüche

1. Verfahren zur Herstellung einer wasserabweisenden und antihaftenden Beschichtung auf einem Träger **S,** vorzugsweise auf einem flexiblen Träger **S** aus Papier oder einer Folie aus synthetischem Polymer, das die folgenden Schritte umfasst:

   1) Herstellen einer wässrigen Silikonemulsion **E1,** die durch Polyadditionsreaktionen zu einem Silikonelastomer vernetzt werden kann, umfassend:

   - mindestens ein Organopolysiloxan **A** mit mindestens zwei ungesättigten funktionellen Gruppen vom $C_2$-$C_6$-Alkenyl-Typ, die an das Silicium gebunden sind, pro Molekül,
   - mindestens ein Organopolysiloxan **B** mit mindestens drei an das Silicium gebundenen Wasserstoffatomen,
   - mindestens einen Polyadditionskatalysator **C,**
   - mindestens einen Emulgator **D,**
   - Wasser,
   - gegebenenfalls mindestens einen Vernetzungsinhibitor **F,**
   - gegebenenfalls mindestens ein Mittel **G** zur Fixierung des pH-Werts, das so gewählt ist, dass der pH-Wert der Emulsion **E1** zwischen 5 und 9, vorzugsweise zwischen 5,5 und 8,5 und noch weiter bevorzugt zwischen 6 und 8 gehalten wird,
   - gegebenenfalls mindestens ein Formulierungsadditiv **H** und
   - mindestens ein Additiv **X,** bei dem es sich um ein lineares Organopolysiloxan handelt, das die Siloxyleinheiten **(1.1)** bis **(1.3)** mit den folgenden Formeln umfasst:

$$Y_a Z^1_b SiO_{\frac{4-(a+b)}{2}} \quad (I.1)$$

$$Z^2_3 SiO_{\frac{1}{2}} \quad (I.2)$$

$$H_d Z^3_e SiO_{\frac{4-(d+e)}{2}} \quad (I.3)$$

   und keine Einheiten der Formel (1.4) umfasst:

$$Z^2_2 SiO_{\frac{2}{2}} \quad (I.4),$$

   in denen:

   - a = 1 und b = 1 oder 2;
   - d = 1 und e = 1 oder 2;
   - das Symbol Y für einen Rest, der eine Kohlenwasserstoffgruppe mit 2 bis 20 Kohlenstoffatomen und

eine Epoxidfunktion umfasst und gegebenenfalls ein oder mehrere Heteroatome wie ein Sauerstoffatom enthält, steht, vorzugsweise das Symbol Y aus den Resten bestehend aus der Gruppe Alkylglycidylether, linearem, verzweigtem oder cyclischem Epoxyalkyl, linearem, verzweigtem oder cyclischem Epoxyalkenyl und Carbonsäureglycidylester ausgewählt ist, und

- die Symbole $Z^1$, $Z^2$ und $Z^3$ gleich oder verschieden sind und für eine einwertige Kohlenwasserstoffgruppe mit 1 bis 30 Kohlenstoffatomen, die vorzugsweise aus der Gruppe bestehend aus Alkylgruppen mit 1 bis 8 Kohlenstoffatomen und Arylgruppen mit 6 bis 12 Kohlenstoffatomen ausgewählt ist und noch weiter bevorzugt aus der Gruppe bestehend aus einer Methyl-, Ethyl-, Propyl-, 3,3,3-Trifluorpropyl-, Xylyl-, Tolyl- und Phenylgruppe ausgewählt ist, stehen, mit den folgenden Bedingungen:
- das Additiv **X** umfasst pro Molekül mindestens zwei Siloxyleinheiten **(1.1),** die epoxidfunktionelle Kohlenwasserstoffgruppen tragen, mindestens drei Siloxyleinheiten **(1.3),** die Hydrogensiloxylgruppen tragen, und eine Gesamtzahl **N** von Siloxyleinheiten zwischen 7 und 30, und
- das Additiv **X** weist einen Gehalt an Siloxyleinheiten **(1.1)** größer oder gleich 200 mmol pro 100 g Additiv **X** auf;

2) Aufbringen der wässrigen Silikonemulsion **E1** auf mindestens eine Fläche des flexiblen Trägers **S** und
3) Entfernen des Wassers und Durchführen der Vernetzung, vorzugsweise durch Erhitzen auf eine Temperatur zwischen 80 °C und 220 °C.

**2.** Verfahren nach Anspruch 1, wobei in Schritt 1) die wässrige Silikonemulsion **E1** hergestellt wird durch Mischen von:

- einer ersten "Voremulsion", umfassend die Organopolysiloxane **A** und **B,** den Emulgator **D,** den Vernetzungsinhibitor **F,** Wasser, gegebenenfalls mindestens ein Mittel **G** zur Fixierung des pH-Werts, das so gewählt ist, dass der pH-Wert der Emulsion **E1** zwischen 5 und 9 gehalten wird, und gegebenenfalls mindestens ein Formulierungsadditiv **H,**
- einer zweiten katalysierenden "Voremulsion", umfassend den Polyadditionskatalysator **C,** den Emulgator **D,** das Organopolysiloxan, Wasser, gegebenenfalls mindestens ein Mittel **G** zur Fixierung des pH-Werts, das so gewählt ist, dass der pH-Wert der Emulsion **E1** zwischen 5 und 9 gehalten wird, und gegebenenfalls mindestens ein Formulierungsadditiv **H,** und
- einer dritten "Voremulsion", umfassend das Additiv **X,** den Emulgator **D,** Wasser, gegebenenfalls mindestens ein Mittel **G** zur Fixierung des pH-Werts, das so gewählt ist, dass der pH-Wert der Emulsion **E1** zwischen 5 und 9 gehalten wird, und gegebenenfalls mindestens ein Formulierungsadditiv **H.**

**3.** Verfahren nach Anspruch 1, wobei das Additiv X einen Gehalt an Siloxyleinheiten **(1.1)** größer oder gleich 200 mmol pro 100 g Additiv **X** und einen Gehalt an Siloxyleinheiten **(1.3)** größer oder gleich 300 mmol pro 100 g Additiv **X** aufweist.

**4.** Verfahren nach Anspruch 1, wobei das Additiv **X** eine Zahl **N1** von Siloxyleinheiten **(1.1)** und eine Zahl **N3** von Siloxyeinheiten **(1.3)** aufweist, die die folgenden Bedingungen erfüllen:

- $2 \leq$ **N1** $\leq 10$ und vorzugsweise $3 \leq$ **N1** $\leq 7$ und
- $3 \leq$ **N3** $\leq 20$ und vorzugsweise $5 \leq$ **N3** $\leq 20$.

**5.** Verfahren nach Anspruch 1, wobei das Additiv **X** eine Gesamtzahl **N** von Siloxyleinheiten zwischen 7 und 25 einschließlich der Grenzen und noch weiter bevorzugt zwischen 7 und 15 aufweist.

**6.** Verfahren nach Anspruch 1, **dadurch gekennzeichnet, dass** für die Siloxyleinheit **(1.1)** des Additivs **X** das Symbol **Y** aus der Gruppe bestehend aus den Gruppen **(R-1)** bis **(R-6)** der folgenden Formeln ausgewählt ist:

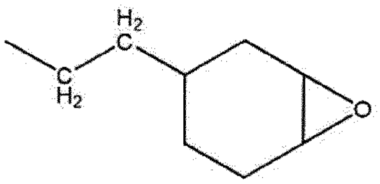

**(R-1)**

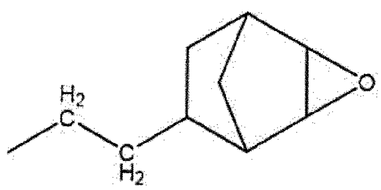

**(R-2)**

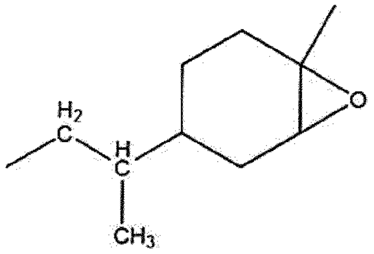

(R-3)

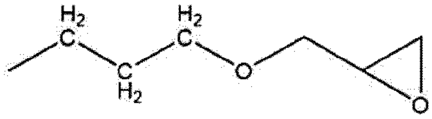

(R-4)

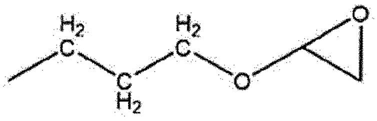

(R-5)

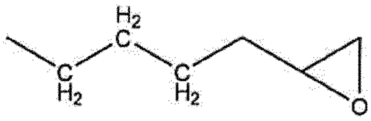

(R-6)

**7.** Verfahren nach Anspruch 1, wobei die Emulsion oder die Mischung der Emulsion **E1** mindestens ein Organopolysiloxan **A** umfasst, das Folgendes umfasst:

- mindestens zwei Siloxyleinheiten **(1.5)** der folgenden Formel:

$$W_aZ_bSiO_{\frac{4-(a+b)}{2}} \quad \textbf{(I.5)}$$

- in der:

  - a = 1 oder 2, b = 0, 1 oder 2 und a+b = 1, 2 oder 3;
  - W unabhängig für eine Alkenylgruppe, die vorzugsweise 2 bis 6 Kohlenstoffatome aufweist, und noch weiter bevorzugt eine Vinyl- oder Allylgruppe steht und
  - Z unabhängig für eine einwertige Kohlenwasserstoffgruppe, die 1 bis 30 Kohlenstoffatome aufweist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolyl- und Phenylrest ausgewählt ist, steht, und

- mindestens eine Siloxyleinheit **(1.6)** der Formel:

$$Z^1_aSiO_{\frac{4-a}{2}} \quad \textbf{(I.6)}$$

in der:
- a = 0, 1, 2 oder 3, und
- $Z^1$ unabhängig für eine einwertige Kohlenwasserstoffgruppe, die 1 bis 30 Kohlenstoffatome aufweist und vorzugsweise aus der Gruppe bestehend aus Alkylgruppen mit 1 bis 8 Kohlenstoffatomen inklusive und Arylgruppen ausgewählt ist und noch weiter bevorzugt aus der Gruppe bestehend aus einem Methyl-, Ethyl-, Propyl-, 3,3,3-Trifluorpropyl-, Xylyl-, Tolyl- und Phenylrest ausgewählt ist, steht.

**8.** Verfahren nach Anspruch 1, wobei der Gehalt an Additiv X zwischen 0,1 und 10 Gew.-%, bezogen auf die Gesamtmasse der Emulsion oder der Mischung der Emulsion **E1,** und vorzugsweise zwischen 0,1 und 5 Gew.-%, bezogen auf die Gesamtmasse der Emulsion oder der Mischung der Emulsion **E1,** liegt.

**9.** Verfahren nach Anspruch 1, wobei das Additiv **X** eine gemäß dem in der Beschreibung angegebenen Verfahren gemessene dynamische Viskosität bei 25 °C zwischen 10 und 700 mPa.s und vorzugsweise zwischen 15 und 300 mPa.s aufweist.

**10.** Verfahren nach Anspruch 1, wobei der Emulgator **D** aus der Gruppe bestehend aus Tensiden, Schutzkolloiden und Mischungen davon ausgewählt wird.

**11.** Wässrige Silikonemulsion **E1,** die durch Polyadditionsreaktionen zu einem Silikonelastomer vernetzt werden kann, wie gemäß einem der Ansprüche 1 bis 10 beschrieben.

## Claims

**1.** Process for producing a water-repellent and release coating on a support **S,** preferably on a flexible support **S** made of paper or of synthetic polymer film, comprising the following steps:

1) preparing an aqueous silicone emulsion **E1** which can be crosslinked into a silicone elastomer by polyaddition reactions, comprising:

- at least one organopolysiloxane **A** having, per molecule, at least two unsaturated functional groups of $C_2$-$C_6$ alkenyl type, bonded to the silicon,
- at least one organopolysiloxane **B** having, per molecule, at least three hydrogen atoms bonded to the silicon,
- at least one polyaddition catalyst **C,**
- at least one emulsifying agent **D,**
- water,
- optionally at least one crosslinking inhibitor **F,**
- optionally at least one pH-fixing agent **G** chosen so as to maintain the pH of the emulsion **E1** between 5 and 9, preferably between 5.5 and 8.5 and even more preferentially between 6 and 8,
- optionally at least one formulation additive **H,** and
- at least one additive **X** which is a linear organopolysiloxane comprising siloxyl units **(1.1)** to **(1.3)** having the formulae below:

$$Y_aZ^1_bSiO_{\frac{4-(a+b)}{2}} \quad \textbf{(I.1)}$$

$$Z^2_3SiO_{\frac{1}{2}} \quad \textbf{(I.2)}$$

$$H_dZ^3_eSiO_{\frac{4-(d+e)}{2}} \quad \textbf{(I.3)}$$

and not comprising units of formula **(1.4):**

$$Z^2_2SiO_{\frac{2}{2}} \quad \textbf{(I.4)}$$

in which:

- a = 1 and b = 1 or 2;
- d = 1 and e = 1 or 2;
- the symbol Y represents a radical comprising a hydrocarbon-based group having from 2 to 20 carbon atoms and an epoxy function, with optionally one or more heteroatoms such as an oxygen atom, preferably the symbol Y is chosen from the radicals consisting of the group: alkyl glycidyl ether, linear branched or cyclic epoxyalkyl, linear, branched or cyclic epoxyalkenyl and carboxylic acid glycidyl ester, and

- the symbols $Z^1$, $Z^2$ and $Z^3$, which may be identical or different, represent a monovalent hydrocarbon-based group having from 1 to 30 carbon atoms, preferably chosen from the group consisting of alkyl groups having from 1 to 8 carbon atoms and aryl groups having from 6 to 12 carbon atoms, and even more preferentially chosen from the group consisting of a methyl, ethyl, propyl, 3,3,3-trifluoropropyl, xylyl, tolyl and phenyl group,

with the following conditions:

- the additive **X** comprises, per molecule, at least two siloxyl units **(1.1)** bearing epoxy-functional hydrocarbon-based groups, at least three siloxyl units **(1.3)** bearing hydrosiloxyl groups and a total number **N** of siloxyl units of between 7 and 30, and
- the additive **X** has a content of siloxyl units **(1.1)** of greater than or equal to 200 mmol per 100 g of additive **X;**

2) applying on at least one face of said flexible support **S** the aqueous silicone emulsion **E1,** and
3) removing the water and carrying out the crosslinking, preferably by heating to a temperature of between 80°C and 220°C.

**2.** Process according to Claim 1, in which, in step 1), the aqueous silicone emulsion **E1** is prepared by mixing:

- a first "pre-emulsion" comprising the organopolysiloxanes **A** and **B,** the emulsifying agent **D,** the crosslinking inhibitor **F,** water, optionally at least one pH-fixing agent **G** chosen so as to maintain the pH of the emulsion **E1** between 5 and 9 and optionally at least one formulation additive **H,**
- a catalysing second "pre-emulsion" comprising the polyaddition catalyst **C,** the emulsifying agent **D,** the organopolysiloxane, water, optionally at least one pH-fixing agent **G** chosen so as to maintain the pH of the emulsion **E1** between 5 and 9 and optionally at least one formulation additive **H,** and
- a third "pre-emulsion" comprising the additive **X,** the emulsifying agent **D,** water, optionally at least one pH-fixing agent **G** chosen so as to maintain the pH of the emulsion **E1** between 5 and 9 and optionally at least one formulation additive **H.**

**3.** Process according to Claim 1, in which the additive **X** has a content of siloxyl units **(1.1)** of greater than or equal to 200 mmol per 100 g of additive **X** and a content of siloxyl units **(1.3)** of greater than or equal to 300 mmol per 100 g of additive **X.**

**4.** Process according to Claim 1, in which the additive **X** has a number **N1** of siloxyl units **(1.1)** and a number **N3** of siloxy units **(1.3)** which correspond to the following conditions:

- $2 \leq$ **N1** $\leq 10$ and preferably $3 \leq$ **N1** $\leq 7$, and
- $3 \leq$ **N3** $\leq 20$ and preferably $5 \leq$ **N3** $\leq 20$.

**5.** Process according to Claim 1, in which the additive **X** has a total number **N** of siloxyl units of between 7 and 25 limits included and even more preferentially between 7 and 15.

**6.** Process according to Claim 1, **characterized in that**, for the siloxyl unit **(1.1)** of the additive **X,** the symbol **Y** is chosen from the group consisting of the groups **(R-1)** to **(R-6)** having the following formulae:

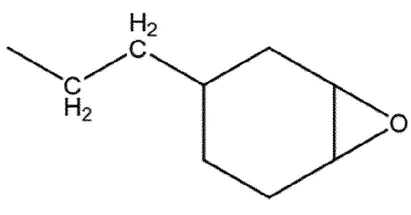

(R-1)

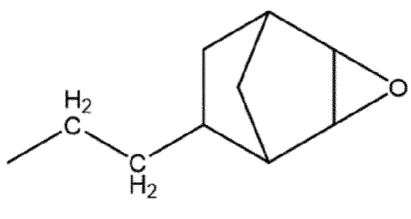

(R-2)

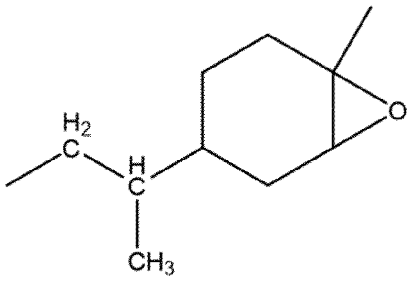

(R-3)

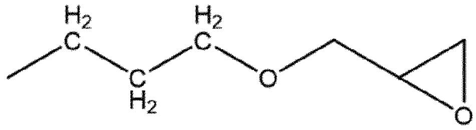

(R-4)

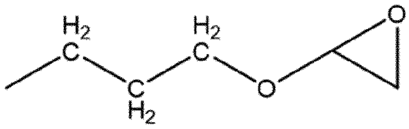

(R-5)

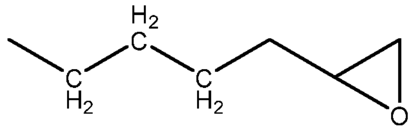

(R-6)

7. Process according to Claim 1, in which the emulsion or the mixture of emulsion **E1** comprises at least one organopolysiloxane **A** comprising:

- at least two siloxyl units **(1.5)** having the formula below:

$$W_aZ_bSiO_{\frac{4-(a+b)}{2}} \quad \text{(I.5)}$$

- in which:

- a = 1 or 2, b = 0, 1 or 2 and a+b = 1, 2 or 3;
- W independently represents an alkenyl group, preferably having from 2 to 6 carbon atoms and, even more preferentially, a vinyl or allyl group, and
- Z independently represents a monovalent hydrocarbon-based group having from 1 to 30 carbon atoms and preferably chosen from the group consisting of alkyl groups having from 1 to 8 carbon atoms inclusive and aryl groups, and even more preferentially chosen from the group consisting of a methyl, ethyl, propyl, 3,3,3-trifluoropropyl, xylyl, tolyl and phenyl radical, and
- at least one siloxyl unit **(1.6)** having the formula:

$$Z^1_aSiO_{\frac{4-a}{2}} \quad \text{(I.6)}$$

in which:

- a = 0, 1, 2 or 3, and
- $Z^1$ independently represents a monovalent hydrocarbon-based group having from 1 to 30 carbon atoms and preferably chosen from the group consisting of alkyl groups having from 1 to 8 carbon atoms inclusive and aryl groups, and even more preferentially chosen from the group consisting of a methyl, ethyl, propyl, 3,3,3-trifluoropropyl, xylyl, tolyl and phenyl radical.

8. Process according to Claim 1, in which the content of additive **X** is between 0.1% and 10% by weight relative to the total mass of the emulsion or of the mixture of emulsion **E1,** and preferably between 0.1% and 5% by weight relative to the total mass of the emulsion or of the mixture of emulsion **E1.**

9. Process according to Claim 1, in which the additive **X** has a dynamic viscosity at 25°C, measured in accordance

with the process stated in the description, of between 10 and 700 mPa.s and preferably between 15 and 300 mPa.s.

**10.** Process according to Claim 1, in which the emulsifying agent **D** is chosen from the group consisting of surfactants, protective colloids and mixtures thereof.

**11.** Aqueous silicone emulsion **E1** which can be crosslinked into a silicone elastomer by polyaddition reactions as described according to any one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1594693 A
- EP 2563870 A
- WO 2008000771 A
- EP 0904315 A
- EP 1309647 A
- GB 1082179 A
- FR 2149519 A
- WO 9421233 A
- US 3194767 A
- US 3159601 A
- US 3159602 A
- US 3220972 A
- EP 0057459 A
- EP 0188978 A
- EP 0190530 A
- US 3419593 A
- US 3715334 A
- US 3377432 A
- US 3814730 A
- FR 1528464 B
- FR 2372874 A
- WO 9935181 A

### Littérature non-brevet citée dans la description

- Fluorinated Surfactants. Marcel Dekker Inc, 1994
- *CHEMICAL ABSTRACTS,* 65545-80-4
- *CHEMICAL ABSTRACTS,* 70983-60-7
- *journal of the american oil chemists' society (JAOCS),* Janvier 1992, vol. 69 (1
- *J. Chim. Phys.,* 1996, vol. 93, 887-898
- **NOLL.** Chemistry and Technology of Silicones. Academic Press, 1968, 1-9